# EUROPÄISCHE PATENTSCHRIFT

(11) **EP 0 480 322 B1**
(45) Veröffentlichungstag und Bekanntmachung des Hinweises auf die Patenterteilung: **16.07.1997**
(21) Anmeldenummer: 91116940.7
(22) Anmeldetag: 04.10.1991
(51) Int. Cl.: H04B 3/32

(54) **Schaltungsanordnung zur Kompensation von Impulsstörungen**
Circuit arrangement for compensating pulse disturbance
Circuit de compensation d'impulsions perturbatrices

(30) Priorität: 10.10.1990 DE 4032068
(43) Veröffentlichungstag der Anmeldung: 15.04.1992
(73) Patentinhaber: Alcatel SEL Aktiengesellschaft, D-70435 Stuttgart (DE); ALCATEL N.V., NL-1077 XX Amsterdam (NL)
(72) Erfinder: Szèchènyi, Kàlmàn, W-7151 Spiegelberg (DE)
(74) Vertreter: Pohl, Herbert, Dipl.-Ing.

(56) Entgegenhaltungen:
- IEEE Transactions on Communications, Bd.38, Nr.4, April 1990, Seiten 551 - 558

## Beschreibung

Die Erfindung betrifft eine Schaltungsanordnung zur Kompensation von Störimpulsen gemäß Anspruch 1.

In einem technischen Bericht der Deutschen Bundespost mit der Nummer FI 442 TB 71 vom Mai 1986 mit dem Titel "Digitalsignalübertragung auf symmetrischen Ortsverbindungs- und Ortsanschlußkabeln" sind ausführliche Untersuchungen zur Herkunft und zur Wirkung von impulsförmigen Störungen, s.g. Impulsstörungen in einem Übertragungskabel beschrieben. Impulsstörungen können demnach sowohl von außen in ein Kabel als auch von einer Leitung innerhalb des Kabels auf andere Leitungen eindringen.

Von außen kommende Impulsstörungen stammen vor allem von Schaltvorgängen an elektrischen Anlagen, aber auch von elektrischen Bahnen mit tyristorgesteuerten Fahrzeugen, die auf den Kabelmantel impulsförmige Störungen induzieren. Diese wiederum erzeugen eine Längsspannung, die zur Entstehung der Impulsstörungen führt.

Im Innern des Kabels verursachte Impulsstörungen werden z.B. durch Schaltvorgänge auf Leiterpaaren erzeugt. Diese sind bedingt durch die bei klassischen Wählsystemen eingesetzten elektromagnetischen Wähl- und Schalteinrichtungen. Bei derartigen Wählsystemen werden Verbindungsaufbau- und -abbaukennzeichen in Form von Rechteckimpulsen (z.B. Belegungs-, Wähl-, Beginn-, Schluß-, Auslöse-, Besetzungszeichen) über bestimmte einzelne Leiter oder auch Leiterpaare eines Ortskabels übertragen. Diese impulsartigen Stromänderungen dringen über die jeweilige Nebensprechkopplung in den Übertragungskanal ein. Die Häufigkeit, mit der solche Impulsstörungen auftreten, ist proportional mit dem Umfang des in dem jeweiligen Kabel geführten Fernsprechverkehrs.

Die energiereichste Impulsstörung wird durch die unsymmetrische Kennzeichenübertragung verursacht. Die größte Intensität der Störung ist an den Hauptverteilern der Ortsvermittlungsstellen zu verzeichnen. Die Leistung der Impulsstörung nimmt allerdings mit der Entfernung von der Störquelle, also von der Ortsvermittlungsstelle, nach Maßgabe der Leistungsübertragungsfunktion des Nah- und Fernnebensprechens ab.

Die Impulsstörungen beeinträchtigen aufgrund ihrer Intensität nicht nur die analoge Übertragung von Fernsprechsignalen, sondern im besonderen Maße natürlich auch die Übertragung von digitalen Signalen. Treten im ersten Fall in unregelmäßigen Abständen Knackgeräusche im Kanal auf, so werden bei den leistungsfähigen Digitalübertragungsverfahren mit ihrer feinen zeitlichen Signalstruktur unter Umständen ganze Symbolfolgen durch ein Impulsstör-Ereignis verfälscht.

In der o.g. technischen Beschreibung wird empfohlen, als geeignete Maßnahme zur Verringerung der Impulsstörung eine quarternäre Leitungskodierung zu verwenden.

Der Nachteil dieser Lösung liegt nun darin, daß sie nicht individuell je nach Bedarf eingesetzt werden kann.

Aus der DE 33 43 584 Al ist eine Schaltung zur Kompensation von Nebensprechen zwischen der Hin- und Rückleitung eines Teilnehmers bekannt. Bei der bekannten Schaltung wird aus dem vom Teilnehmer ausgehenden Signal ein Teil abgezweigt und über ein adaptives Filter und einen Inverter ein Kompensationssignal gewonnen und dem Empfangssignal zugeführt. Eine solche Schaltung kann nur digitale Störsignale nicht aber die eingangs beschriebenen Impulsstörungen unterdrücken.

Aus IEEE Transactions on Communication Technology, Bd. 38, Nr. 4, April 1990, Seiten 551 bis 558 ist eine Schaltung zur Kompensation von Nebensprechen zwischen mehreren Sendeleitungen mehrerer Teilnehmer und einer Empfangsleitung eines Teilnehmers bekannt. Die Sendeleitungen sind jeweils über ein adaptives FIR-Filter mit einem Subtraktionsglied verbunden. In jedem adaptiven Filter wird aus dem Sendesignal auf der jeweiligen Sendeleitung ein Kompensationssignal gewonnen. In dem Subtraktionsglied wird die Summe der Kompensationssignale vom Empfangssignal auf der Empfangsleitung subtrahiert, wodurch eine Kompensation der auf der Empfangsleitung anliegenden digitalen Nebensprechsignale erfolgt.

Der Erfindung liegt daher die Aufgabe zugrunde, eine Schaltungsanordnung zu schaffen, die auch nicht digitale Impulsstörungen ganz oder teilweise kompensieren kann.

Diese Aufgabe wird durch die Merkmale des Anspruchs 1 gelöst.

Weitere Ausgestaltungen der Erfindung sind den übrigen Ansprüchen und dem folgenden Teil der Beschreibung zu entnehmen.

Ein besonderer Vorteil der Erfindung liegt darin, daß die Schaltungsanordnung an die Größe und Art der Teilnehmerabschlußschaltung und/oder an die Art und Belegung der Übertragungskabel angepaßt werden kann.

Sechs Ausführungsbeispiele der Erfindung werden anhand von sechs Figuren im folgenden beschrieben. Es zeigen:
- Fig. 1: ein erstes Ausführungsbeispiel,
- Fig. 2: ein zweites Ausführungsbeispiel mit einem adaptiven Filter zur Simulation der Impulsstörung,
- Fig. 3: ein drittes Ausführungsbeispiel mit einer Sendeleitung als Referenzleitung,
- Fig. 4: ein viertes Ausführungsbeispiel mit einer zusätzlichen Nebensprechkompensation,
- Fig. 5: ein fünftes Ausführungsbeispiel mit mehreren Referenzleitungen, und
- Fig. 6: ein sechstes Ausführungsbeispiel mit zwei Epfangsleitungen und nur einer Referenzleitung.

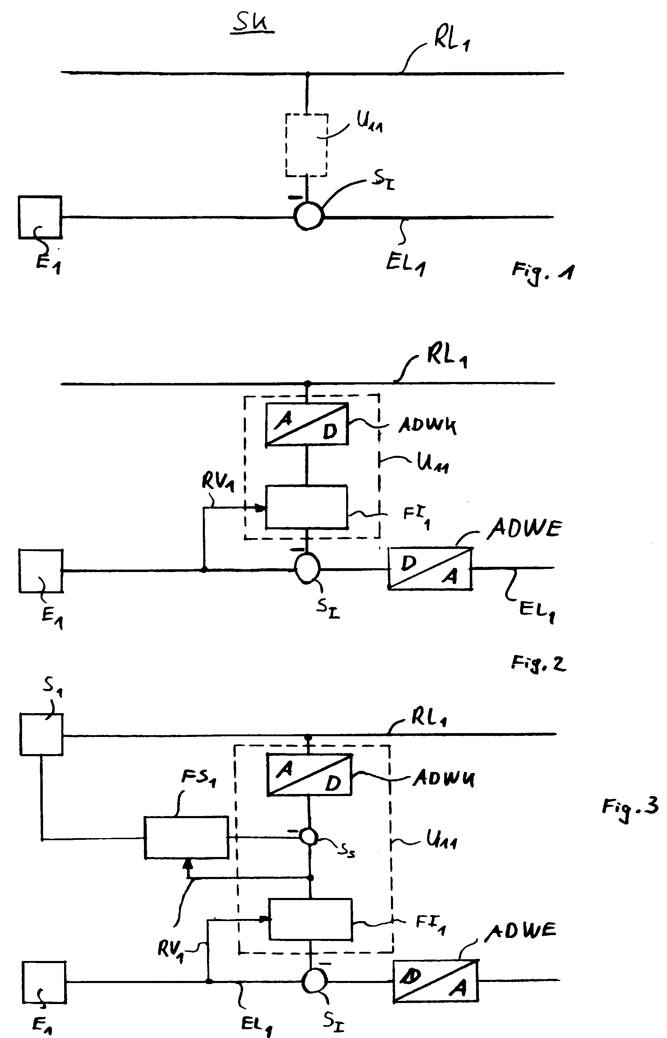

Das erste Ausführungsbeispiel einer Schaltungsanordnung SK zur Kompensation von Impulsstörungen ist in Fig. 1 abgebildet und enthält eine Empfangsschaltung E₁, eine Empfangsleitung EL₁, eine Referenzleitung RL₁, einen Umsetzer U₁₁ und ein Subtraktionsglied S_{I} auf. Die Empfangsschaltung E₁ ist Teil einer Leitungsendeinrichtung, die für einen einfachen Teilnehmer oder eine Anlage vorgesehen ist, in ihr endet die Empfangsleitung EL₁. Die Referenzleitung RL₁ ist mit der Empfangsleitung EL₁ über den Umsetzer U₁₁ und den Subtraktionseingang des Subtraktionsgliedes S_{I} verbunden. Im Subtraktionsglied S_{I} wird das Referenzsignal vom Empfangssignal, das an der Empfangsleitung anliegt, subtrahiert.

Unter Empfangsschaltung E₁ ist der Empfangsteil einer Leitungseinrichtung zu verstehen, der im Falle einer Leitungsendeinrichtung dem Empfangsteil eines Teilnehmers zugeordnet ist. Der Umsetzer U₁₁ befindet sich dabei in der Leitungsendeinrichtung.

Die Erfindung ist anhand von Ausführungsbeispielen beschrieben, die sich auf eine Leitungsendeinrichtung beziehen, sie kann aber genauso in anderen Leitungseinrichtungen, wie z.B. Leitungsschnittstelleneinrichtungen oder in Teilnehmeranlagen verwendet werden.

Die Referenzleitung RL₁ und die Empfangsleitung EL₁ sind im Übertragungskabel möglichst dicht benachbart, damit eine auftretende Impulsstörung auf beide Leitungen möglichst gleichermaßen wirkt. Dies läßt sich vorteilhafterweise durch die diagonale Anordnung der beiden Leitungen in einem Sternvierer realisieren. Die Referenzleitung RL₁ weist außer der Verbindung mit dem Umsetzer U₁₁ keine weiteren Verbindungen, aber vorteilhafterweise auf beiden Endseiten einen an die Empfangsleitung EL₁ angepaßten Abschlußwiderstand auf. Eine solche Referenzleitung wird als Blindleitung bezeichnet.

Tritt nun eine Impulsstörung auf, wird diese sowohl in der Referenzleitung RL₁ als auch in der Empfangsleitung EL₁ gleichermaßen induziert und über den Umsetzer U₁₁, das Subtraktionsglied S_{I} in der Empfangsleitung EL₁ wenigstens teilweise kompensiert. Der Umsetzer ist im einfachsten Fall eine normale Verbindungsleitung.

Der Grad der Kompensation läßt sich durch die Schaltungsanordnung SK nach dem in Fig. 2 abgebildeten, zweiten Ausführungsbeispiel erhöhen, wenn der Umsetzer U₁₁ aus einem Analog/Digital-Wandler ADWK und einem adaptiven Filters FI₁ besteht, wobei der Analog-Eingang des Analog/Digital-Wandlers ADWK mit der Referenzleitung RL₁ und dessen Digital-Ausgang und dem Signaleingang des adaptiven Filters FI₁ verbunden ist. Der Signalausgang des adaptiven Filters FI₁ ist zu dem Subtraktionseingang des Subtraktionsgliedes S_{I} geführt, so daß das Ausgangssignal des Filters FI₁, das die auf der Empfangsleitung EL₁ anliegende Impulsstörung simuliert, vom Empfangssignal, das am anderen Eingang des Subtraktionsgliedes S_{I} anliegt, subtrahiert wird. Die Schaltungsanordnung SK enthält für eintreffende Signale in der Empfangsleitung EL₁ noch einen zweiten Analog-Digital-Wandler ADWE, bei dem der Digital-Ausgang mit dem Subtraktionsglied S_{I} verbunden ist und sich möglichst dicht bei diesem befindet.

Durch die adaptive Kompensation ist die enge benachbarte Anordnung zwischen der Referenzleitung RL₁ und der Empfangsleitung EL₁ im Übertragungskabel nicht mehr notwendig, d.h. die beiden Leitungen können sich ohne Schwierigkeiten in unterschiedlichen Sternvierern befinden.

Zur Einstellung der Filterkoeffizienten ist der Ausgang des Subtraktionsgliedes S₁ über eine Regelsignalverbindung RV₁ mit einem Regelsignaleingang des adaptiven Filters FI₁ verbunden. Die Maßgabe zur Einstellung der Koeffizienten ist es, das Regelsignal zu minimieren. Eine derartige Einstellung der Filterkoeffizienten ist dem Fachmann prinzipiell z.B. aus der DE 31 20 434 A1 oder aus der IEEE Journal on Selected Areas in Communications, VOL. SAC.4, No. 8 November 1986, Seite 1337 bis 1349 bekannt und wird daher nicht weiter vertieft.

Die Anzahl der Koeffizienten des Filters FI₁ wird durch die Art und den Pegel des zu simulierenden Signals bestimmt. Bei der Verwendung von adaptiven Filtern FI₁ zur Kompensation von Impulsstörungen empfiehlt es sich, wegen der nicht kalkulierbaren Größe ein adaptives Filter mit etwa 30 bis 40 Koeffizienten zu wählen. Bei der Verwendung eines rekursiven Filters reduziert sich die Anzahl der Koeffizienten in bekannter Weise.

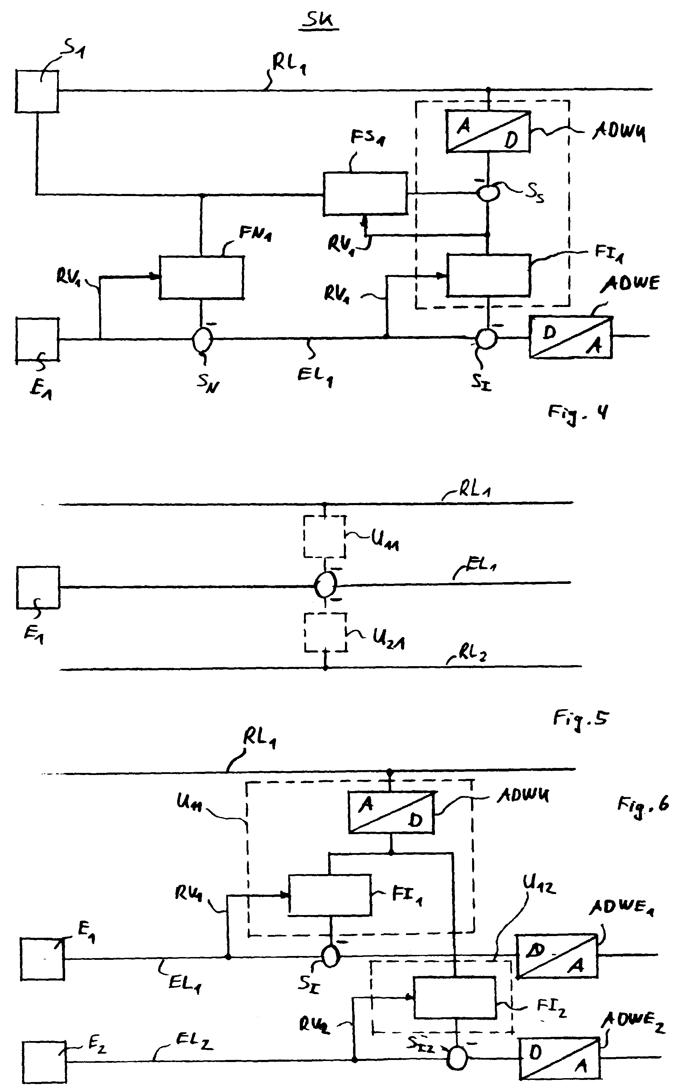

Die Erläuterungen zur Einstellung der Koeffizienten treffen sinngemäß auch auf die nachfolgend beschriebene Filter FS₁ (Fig. 3, Fig. 4) und FN₁ (Fig. 4) zur Kompensation eines Sendesignals oder eines Nebensprechsignals zu. Es ist bei diesen adaptiven Filtern FS₁, FN₁ zu berücksichtigen, daß eine andere Anzahl von Filterkoeffizienten, im Falle des Filters FN₁ zur Kompensation von Nebensprechen z.B. vier, vorgesehen ist.

In Fig. 3 ist ein drittes Ausführungsbeispiel abgebildet, das sich vom zweiten Ausführungsbeispiel dadurch unterscheidet, daß als Referenzleitung RL₁ eine Sendeleitung verwendet wird, die z.B. mit einer Sendeschaltung S₁ eines Teilnehmers verbunden ist, dem auch die Empfangsschaltung E₁ zugeordnet ist, also eines Teilnehmers der nicht nur Nachrichten empfängt, sondern auch sendet.

Die Schaltungsanordnung SK nach Fig. 3 weist hierzu im Umsetzer U₁₁ neben den im zweiten Ausführungsbeispiel beschriebenen und gleich bezeichneten Komponenten ein zusätzliches adaptives Filter FS₁ und ein zweites Subtraktionsglied S_{S} zur Kompensation des Sendesignals auf. Der Signaleingang des adaptiven Filters FS₁ ist hierzu mit der Sendeschaltung S₁ verbunden. Der Signalausgang ist mit den Subtraktionseingang des Subtraktionsgliedes S_{S} verbunden, das in der Verbindungsleitung vom Analog/Digital-Wandler ADWK zum Signaleingang des Filter FI₁ eingefügt ist. Eine Regelsignalverbundung führt vom Signalausgang des Subtraktionsgliedes S_{S} zum Regelsignaleingang des adaptiven Filters FS₁.

Das vierte Ausführungsbeispiel ist eine Weiterbildung des dritten Ausführungsbeispiels und ist in Fig. 4 abgebildet. Es weist zusätzlich zu dem Umsetzer U₁₁, aus Fig. 3, eine Vorrichtung zur Kompensation der von der Sendeschaltung 1 erzeugten und über die Referenzleitung RL₁ auf die Empfangsleitung E1₁ induktiv gekoppelte Nebensprechen auf. Diese Kompensation geschieht durch die Anordnung eines dritten adaptiven Filters FN₁, dessen Signaleingang, ebenso wie der des zweiten adaptiven Filters FS₁, mit der Sendeschaltung S₁ verbunden ist und dessen Signalausgang mit dem Subtraktionseingang eines dritten, in die Eingangsleitung EL₁ eingefügten Subtraktionsgliedes S_{N} verbunden ist. Der Regelsignaleingang erhält sein Regelsignal vom Ausgang des Subtraktionsgliedes S_{N}.

In Fig. 5 ist eine Weiterbildung des ersten Ausführungsbeispiels abgebildet. Hier ist eine zusätzliche Referenzleitung RL₂ vorhanden, die über einen zweiten Umsetzer U₂₁, und einem zweiten Subtraktionseingang des Subtraktionsgliedes S_{I} mit der Empfangsleitung EL₁ verbunden ist. Durch die Zweifachkopplung kann der Pegel des Kompensationssignals erhöht und an den Pegel der Impulsstörung in der Empfangsleitung EL₁ angepaßt werden, sofern dieser größer ist als der in der Referenzleitung. Gegebenenfalls kann die Empfangsleitung EL₁ auch mit drei oder mehr Referenzleitungen verbunden werden. Zur Feinabstimmung können ein oder beide Umsetzer U₁₁, U₂₁ mit einem Dämpfungsglied versehen werden (nicht asbgebildet), was auch für das Ausführungsbeispiel 1 gilt.

In Fig. 6 ist das sechste Ausführungsbeispiel abgebildet. Es unterscheidet sich vom Ausführungsbeispiel 2 dadurch, daß über den Analog/Digital-Wandler ADWK zusätzlich eine zweite Empfangsleitung EL₂ für eine zweite Empfangsschaltung E₂ mit der Referenzleitung RL₁ verbunden ist. Dies ist dadurch erreicht, daß der Ausgang des Analog/Digital-Wandlers ADWK mit dem Eingang des zwischen adaptiven Filters FI₂ und dessen Ausgang mit dem Subtraktionseingang eines, in die Empfangleitung EL₂ eingefügten, Subtraktionsgliedes S_{I2} verbunden ist. Diesem ist ein Analog/Digital-Wandler ADWE₂ vorgeschaltet. Die Kompensation von Impulsstörungen auf die zweite Empfangsschaltung E₂ erfolgt dabei wie die schon beschriebene Kompensation auf die erste Empfangsschaltung E₁.

Der Vorteil dieses Ausführungsbeispiels liegt in der Mehrfachnutzung der an der Referenzleitung 1 anliegenden Impulsstörung.

Die Referenzleitung kann auch auf die gleiche, wie im sechsten Ausführungsbeispiel beschriebene, Art und Weise für mehr als zwei Empfänger Zug Unterdrückung einer Impulsstörung benutzt werden. Die Pegelanpassung erfolgt über die adaptiven Filter FI₁, FI₂.

Die Ausführungsbeispiele 1 und 5 sind vorzugsweise in Leitungsendeinrichtungen anwendbar, bei denen bestehende Leitungen nicht zur Übertragung benutzt werden, wie dies z.B. der Fall ist, wenn solche Blindleitungen zur Unterdrückung von Nebensprechen in den Kabeln vorhanden sind.

Die einzelnen Merkmale der Ausführungsbeispiele 1 bis 6 können, soweit es aufgrund der vorliegenden Netzstruktur, der Kabelbelegung und der Art der Anschlüsse oder der Teilnehmerendeinrichtungen sinnvoll ist, kombiniert werden.

So kann es z.B. günstig sein, eine der beschriebenen Empfangsleitungen mit einer Vorrichtung zur Kompensation von Nebensprechen zu versehen, das von zusätzlichen Sendeleitungen der Teilnehmerendeinrichtung herrührt, die nicht in den Auksführungsbeispielen beschrieben wurden. Gleiches könnte für weitere zusätzliche Empfangsleitungen geschehen.

In den Empfängern E₁, E₂, die in den Ausführungsbeispielen zwei bis sechs aufgeführt sind ist bei der Weiterverarbeitung des Empfangssignals zu berücksichtigen, daß das Empfangssignal schon durch den Analog/Digital-Wandler ADWE, ADWE₁, ADWE₂ digitalisiert sind und ggf. wieder analogisiert werden müssen.

## Patentansprüche

1. Schaltungsanordnung zur Kompensation von nicht digitalen Störimpulsen für eine, mit einer Empfangsleitung (EL₁) verbundenen Empfangsschaltung (E₁) einer Leitungseinrichtung eines Nachrichtenübertragungssystems, mit
- einem mit einer Blindleitung (RL₁) verbundenen Umsetzer (U₁₁, U₁₂, U₂₁), über den sich für eine auf der Empfangsleitung (EL) anliegende nicht digitale Impulsstörung ein Referenzsignal ableiten läßt, und
- einem Subtraktionsglied (S_{I}), das das abgeleitete Referenzsignal, von dem an der Empfangsleitung (EL₁) anliegenden Signal, subtrahiert.

2. Schaltungsanordnung nach Anspruch 1, dadurch gekennzeichnet, daß die Empfangsleitung (EL₁) und die Blindleitung (RL₁) wenigstens streckenweise gemeinsam in einem Übertragungskabel (K) geführt sind.

3. Schaltungsanordnung nach einem der Ansprüche 1 oder 2, dadurch gekennzeichnet, daß die Empfangsleitung (EL₁) und die Blindleitung (RL₁) im Übertragungskabel (K) in einer Sternviereranordnung geführt sind.

4. Schaltungsanordnung nach einem der Ansprüche 1 bis 3, dadurch gekennzeichnet, daß der Umsetzer (U₁₁) eine Vorrichtung (FS₁) zur Kompensation eines auf der Blindleitung (RL₁) anliegenden Übertragungssignals aufweist.

5. Schaltungsanordnung nach Anspruch 4, dadurch gekennzeichnet, daß der Umsetzer (U₁₁) einen Pfad mit nachfolgend, in der genannten Reihenfolge von der Blindleitung (RL₁) ausgehend, aufgeführten Bauelementen enthält; einen Analog/Digital-Wandler (ADWK) und einen Echokompensator in Form des adaptiven Filters (FS₁), dessen Signaleingang über eine getrennte Verbindung an der Blindleitung (RL₁) anliegt, dessen Ausgang über den Subtraktionseingang eines Subtraktionsgliedes (S_{S}) dem Kopplungspfad zugeführt ist und dessen Regelsignaleingang am Kopplungspfad hinter der Verbindung mit dem Ausgang des adaptiven Filters (FS₁) anliegt.

6. Schaltungsanordnung nach einem der Ansprüche 1 bis 5, dadurch gekennzeichnet, daß der Umsetzer (U₁₁) zur Simulation von Störimpulsen ein adaptives Filter (FI₁) aufweist, dessen Signaleingang über einen Analog/Digital-Wandler (ADWK) mit der Blindleitung (RL₁) verbunden ist, dessen Ausgang über den Subtraktionseingang eines Subtraktionsgliedes (S_{I}) mit der Empfangsleitung (EL₁) verbunden ist, und dessen Regelsignaleingang über eine Regelsignalverbindung (RV₁) mit der Empfangsleitung (EL₁) zwischen dem Subtrahierglied (S_{I}) und der Empfangsschaltung (E₁) verbunden ist.

7. Schaltungsanordnung nach einem der Ansprüche 1 bis 6, dadurch gekennzeichnet, daß die Empfangsleitung (EL₁) mit mehreren Blindleitungen (RL₁, RL₂) jeweils durch einen Umsetzer (U₁₁, U₂₁) verbunden ist.

8. Schaltungsanordnung nach einem der Ansprüche 1 bis 6, dadurch gekennzeichnet, daß die Blindleitung (RL₁) mit mehreren Empfangsleitungen (EL₁, EL₂) jeweils durch einen Umsetzer (U₁₁, U₁₂) verbunden ist.

9. Schaltungsanordnung nach einem der Ansprüche 1 bis 8, dadurch gekennzeichnet, daß sie eine Vorrichtung (FN₁) zur Kompensation von Nebensprechen aufweist.

10. Schaltungsanordnung nach Anspruch 9, dadurch gekennzeichnet, daß die Vorrichtung (FN₁) zur Kompensation von Nebensprechen das Nebensprechen von der Blindleitung (RL₁) auf die Empfangsleitung (EL₁) kompensiert.

11. Schaltungsanordnung nach Anspruch 9, dadurch gekennzeichnet, daß eine Vorrichtung (FN₁) zur Kompensation des Nebensprechens von mehreren Leitungen auf die Empfangsleitung (EL₁) vorgesehen ist.

## Claims

1. A circuit arrangement for the compensation of non-digital interference pulses for a receiving circuit (E₁), connected to a receiving line (EL₁), of a line device of a communications transmission system with
- a converter (U₁₁, U₁₂, U₂₁) which is connected to a dummy line (RL₁) and via which a reference signal can be obtained for a non-digital pulse interference present on the receiving line (EL) and
- a subtracter circuit (S_{I}) which subtracts the obtained reference signal from the signal present on the receiving line (EL₁).

2. A circuit arrangement according to Claim 1, characterised in that the receiving line (EL₁) and the dummy line (RL₁) extend jointly, at least in sections, in a transmission cable (K).

3. A circuit arrangement according to one of Claims 1 or 2, characterised in that the receiving line (EL₁) and the dummy line (RL₁) extend in a star quad arrangement in the transmission cable (K).

4. A circuit arrangement according to one of Claims 1 to 3, characterised in that the converter (U₁₁) comprises a device (FS₁) for compensating a transmission signal present on the dummy line (RL₁).

5. A circuit arrangement according to Claim 4, characterised in that the converter (U₁₁) contains a path comprising components listed in the following in their order from the dummy line (RL₁): an analogue/digital converter (ADWK) and an echo compensator in the form of the adaptive filter (FS₁) whose signal input is connected via a separate connection to the dummy line (RL₁), whose output leads via the subtraction input of a subtracter circuit (S_{S}) to the coupling path, and whose control signal input is connected to the coupling path downstream of the connection to the output of the adaptive filter (FS₁).

6. A circuit arrangement according to one of Claims 1 to 5, characterised in that for the simulation of interference pulses the converter (U₁₁) comprises an adaptive filter (FI₁) whose signal input is connected via an analogue/digital converter (ADWK) to the dummy line (RL₁), whose output is connected via the subtraction input of a subtracter circuit (S_{I}) to the receiving line (EL₁) and whose control signal input is connected via a control signal line (RV₁) to the receiving line (EL₁) between the subtracter circuit (S_{I}) and the receiving circuit (E₁).

7. A circuit arrangement according to one of Claims 1 to 6, characterised in that the receiving line (EL₁) is connected to a plurality of dummy lines (RL₁, RL₂) in each case by a converter (U₁₁, U₂₁).

8. A circuit arrangement according to one of Claims 1 to 6, characterised in that the dummy line (RL₁) is connected to a plurality of receiving lines (EL₁, EL₂) in each case by a converter (U₁₁, U₁₂).

9. A circuit arrangement according to one of Claims 1 to 8, characterised in that it comprises a device (FN₁) for the compensation of crosstalk.

10. A circuit arrangement according to Claim 9, characterised in that the device (FN₁) for the compensation of crosstalk compensates the crosstalk from the dummy line (RL₁) to the receiving line (EL₁).

11. A circuit arrangement according to Claim 9, characterised in that a device (FN₁) is provided for compensating the crosstalk from a plurality of lines to the receiving line (EL₁).

## Revendications

1. Circuit pour la compensation d'impulsions parasites non numériques dans un circuit de réception (E₁) relié à la ligne de réception (EL₁) de l'équipement de ligne d'un système de télécommunication, avec
- un convertisseur (U₁₁, U₁₂, U₂₁) relié à un bras de réactance (RL₁) par l'intermédiaire duquel on peut dériver un signal de référence pour une impulsion parasite non numérique présente sur la ligne de réception (EL), et
- un soustracteur numérique (S_{I}) qui soustrait le signal de référence dérivé du signal présent sur la ligne de réception (EL₁).

2. Circuit conformément à la spécification 1, caractérisé par le fait que la ligne de réception (EL₁) et le bras de réactance (RL₁) sont conduits ensemble, au moins sur certaines distances, dans un câble de transmission (K).

3. Circuit conformément à l'une des spécifications 1 ou 2, caractérisé par le fait que la ligne de réception (EL₁) et le bras de réactance (RL₁) sont conduits dans le câble de transmission (K) en quarte étoile.

4. Circuit conformément à l'une des spécifications 1 ou 3, caractérisé par le fait que le convertisseur (U₁₁) comporte un dispositif (FS₁) pour la compensation d'un signal de transmission présent sur le bras de réactance (RL₁).

5. Circuit conformément à la spécification 4, caractérisé par le fait que le convertisseur (U₁₁) comporte une voie avec les éléments mentionnées ci-après, placés dans l'ordre indiqué à partir du bras de réactance (RL₁); un convertisseur analogique-numérique (ADWK) et un compensateur d'échos sous la forme d'un filtre adaptatif (FS₁) dont l'entrée de signal est reliée séparément au bras de réactance (RL₁), et dont la sortie est raccordée à la voie de couplage par l'intermédiaire de l'entrée de soustraction d'un soustracteur numérique (S_{S}), et dont l'entrée de signal de réglage sur la voie de couplage est raccordée à la sortie du filtre adaptatif (FS₁).

6. Circuit conformément à l'une des spécifications 1 à 5, caractérisé par le fait que le convertisseur (U₁₁) comporte, pour la simulation d'impulsions parasites, un filtre adaptatif (FI₁) dont l'entrée de signal est reliée au bras de réactance (RL₁) par l'intermédiaire d'un un convertisseur analogique-numérique (ADWK), dont la sortie est raccordée à la ligne de réception (EL₁) par l'intermédiaire de l'entrée de soustraction d'un soustracteur numérique (S_{I}), et dont l'entrée de signal de réglage est raccordée entre le soustracteur numérique (S_{I}) et le circuit de réception (E₁), par l'intermédiaire de la ligne de jonction de signal de réglage (RV₁), à la ligne de réception (EL₁).

7. Circuit conformément à l'une des spécifications 1 à 6, caractérisé par le fait que la ligne de réception (EL₁) est reliée à plusieurs bras de réactance (RL₁, RL₂) par l'intermédiaire de convertisseurs (U₁₁, U₂₁).

8. Circuit conformément à l'une des spécifications 1 à 6, caractérisé par le fait que le bras de réactance (RL₁) est relié à plusieurs lignes de réception (EL₁, EL₂) par l'intermédiaire de convertisseurs (U₁₁, U₁₂).

9. Circuit conformément à l'une des spécifications 1 à 8, caractérisé par le fait qu'il comporte un dispositif (FN₁) pour la compensation de diaphonie.

10. Circuit conformément à la spécification 9, caractérisé par le fait que le dispositif (FN₁) pour la compensation de diaphonie compense la diaphonie du bras de réactance (RL₁) sur la ligne de réception (EL₁).

11. Circuit conformément à la spécification 9, caractérisé par le fait qu'un dispositif (FN₁) est prévu pour la compensation de diaphonie de plusieurs lignes sur la ligne de réception (EL₁).
